# EUROPEAN PATENT APPLICATION

(11) **EP 2 821 325 A1**
(43) Date of publication of application: **07.01.2015**
(21) Application number: 14174666.9
(22) Date of filing: 27.06.2014
(51) Int. Cl.: B62D 21/15, B60R 19/34, B60R 19/18

(54) **Vehicular shock absorbing device and vehicular shock absorbing structure**

(30) Priority: 01.07.2013 JP 2013138169
(71) Applicant: Kojima Industries Corporation, Toyota-shi, Aichi 471-0875 (JP)
(72) Inventor: Noyori, Keisuke, Aichi-ken, 471-0875 (JP)
(74) Representative: Smith, Matthew

(57) **Abstract**

Providing a vehicular shock absorbing device and a vehicular shock absorbing structure, which includes a crash box composed of a hollow structure having a transverse cross sectional surface area which gradually decreases in the backward direction of the vehicle. The crash box is disposed on a rear side of a bumper reinforcement, while a crash box supporting member having a through hole is fixed to the vehicle such that the crash box is interposed between the crash box supporting member and the bumper reinforcement in the longitudinal direction of the vehicle, and the through hole is open in the longitudinal direction of the vehicle. The crash box has an end portion on a rear side of the vehicle, which is fitted in the through hole in the crash box supporting member.

## Description

### TECHNICAL FIELD

The present invention relates generally to a shock absorbing device and a shock absorbing structure for a vehicle, and more particularly to a shock absorbing device and a shock absorbing structure for a vehicle, which are improved to advantageously absorb an impact energy applied via a bumper reinforcement.

### BACKGROUND ART

A vehicle such as an automobile is generally equipped with a vehicular shock absorbing device (hereinafter simply referred to as the shock absorbing device) to absorb an impact energy generated in the event of a collision. The shock absorbing device has various structures, and one example of the shock absorbing device is a crash box. As disclosed in Japanese Patent No.4766422, for example, the crash box is composed of a hollow structure which is installed on the vehicle so as to extend in the longitudinal or running direction of the vehicle, and so as to be interposed between a bumper reinforcement located in a front or rear region of the vehicle so as to extend in the transverse or width direction of the vehicle, and side members extending in the longitudinal direction of the vehicle. The crash box is plastically deformed by an impact load applied via the bumper reinforcement in the event of a light collision or the like, and thereby absorbs the impact energy.

As described above, in the vehicle such as the automobile, the shock absorbing device is installed between the bumper reinforcement and the side members to absorb the impact energy applied via the bumper reinforcement. Thus, damage to the side members upon the light collision or the like is minimized, and the vehicle can be repaired after the collision by replacing only the crash box, without replacing the side members, which are expensive. Accordingly, the cost of repair after the collision can be minimized.

When the bumper reinforcement is displaced in the backward direction of the vehicle by the applied impact load, the conventional shock absorbing device, which is composed of the hollow structure and which is installed between the bumper reinforcement and the side members, is compressed in its axial direction between the bumper reinforcement, and the side members which are fixed in position, and plastically deformed into the form of bellows in the longitudinal direction of the vehicle. Thus, a remnant of the plastically deformed portion of the shock absorbing device inevitably remains between the bumper reinforcement and the side members after the light collision. On the other hand, an amount of the impact energy absorbed by the shock absorbing device is determined by an amount of displacement (deformation) of the shock absorbing device and an amount of a stress caused when the shock absorbing device is plastically deformed by the applied impact load. Accordingly, in order to secure absorption of a desired amount of the impact energy, an axial length (height) of the conventional shock absorbing device is set at a sum of a length which corresponds to the displacement amount of the shock absorbing device required for absorbing the desired amount of the impact energy and which is called a "shock absorbing stroke", and a length (height) of the remnant of the plastically deformed portion of the shock absorbing device. Alternately, the absorption of the desired amount of the impact energy has been secured by increasing the thickness of a lateral wall portion of the shock absorbing device, thereby improving a breaking strength of the shock absorbing device.

However, if the axial length of the shock absorbing device is set at the sum of the shock absorbing stroke required for absorbing the desired amount of the impact energy, and the length of the remnant of the plastically deformed portion of the shock absorbing device, the above-indicated sum includes the length of the remnant as a redundant length which does not contribute to the absorption of the impact energy, giving rise to a problem of an undesirable increase of the size and weight of the shock absorbing device. Further, there is generally a limited narrow space between the bumper reinforcement and the side members, so that the axial length of the shock absorbing device is limited, and sometimes even the shock absorbing stroke cannot be made sufficient, giving rise to a risk of difficulty in securing the absorption of the desired amount of the impact energy. In order to avoid such a risk, it has been considered adjusting the location of the bumper reinforcement in the longitudinal direction of the vehicle in accordance with the axial length of the shock absorbing device. However, in such a case, there is a potential risk that a freedom of design of a bumper cover is restricted, for example. Further, if the thickness of the lateral wall portion of the shock absorbing device is increased while its axial length is restricted, there is a problem of an undesirable increase of the weight of the shock absorbing device.

### PRIOR ART DOCUMENT

### PATENT DOCUMENT

Patent Document 1: Japanese Patent No.4766422

### SUMMARY OF THE INVENTION

### TECHNICAL PROBLEMS

The present invention was made in the light of the background art described above. It is therefore a first object of the present invention to provide an improved shock absorbing device for a vehicle, which can secure absorption of a desired amount of impact energy and which has an effectively reduced weight. It is a second object of the present invention to provide a shock absorbing structure for the vehicle using such a shock absorbing device.

### SOLUTION TO PROBLEMS

The above-indicated first object can be achieved according to the principle of the present invention, which provides a shock absorbing device for a vehicle, for absorbing an impact energy applied via a bumper reinforcement, the shock absorbing device comprising:
a crash box composed of a plastically deformable hollow structure having a transverse cross sectional surface area which gradually decreases in an axial direction, the crash box being disposed on a rear side of the bumper reinforcement so as to extend in a longitudinal direction of the vehicle such that the transverse cross sectional surface area of the crash box gradually decreases in a backward direction of the vehicle; and
a crash box supporting member made of a material having a higher deformation strength than the crash box, the crash box supporting member being disposed such that the crash box disposed on the rear side of the bumper reinforcement is interposed between the crash box supporting member and the bumper reinforcement in the longitudinal direction of the vehicle, wherein a through hole is formed through the crash box supporting member so as to be open in the longitudinal direction of the vehicle, and one of opposite axial end portions of the crash box is fitted in the through hole, which one axial end portion of the crash box is positioned on a rear side of the vehicle and has a smaller transverse cross sectional surface area than the other of the above-indicated opposite axial end portions of the crash box positioned on a front side of the vehicle, whereby the crash box supporting member is fixed to the vehicle,
the shock absorbing device being configured such that when an impact load is applied to the crash box via the bumper reinforcement, the crash box is displaced in pressing contact with the through hole in the crash box supporting member in the backward direction of the vehicle while the crash box is plastically deformed in its radially inward direction, thereby absorbing the impact energy.

According to one preferred form of the shock absorbing device for a vehicle of the present invention, the crash box supporting member is composed of an auxiliary member fixed to a side member which is spaced apart from the bumper reinforcement in the longitudinal direction of the vehicle.

According to another preferred form of the shock absorbing device for a vehicle of the present invention, the crash box is composed of a resin molded article.

According to another preferred form of the shock absorbing device for a vehicle of the present invention, the crash box has a shape of a truncated polygonal pyramid.

According to a further preferred form of the shock absorbing device for a vehicle of the present invention, the crash box includes a lateral wall portion and a bottom wall portion, and on one side of the crash box opposite to the bottom wall portion, an outer flange portion is formed integrally with the lateral wall portion so as to extend over an entire circumference of the lateral wall portion, wherein the crash box is installed on the vehicle such that an end face of the lateral wall portion and the outer flange portion are held in abutting contact with the bumper reinforcement.

According to a still further preferred form of the shock absorbing device for a vehicle of the present invention, the lateral wall portion of the crash box has a thickness of at least 1.0 mm and not more than 4.0 mm.

According to a yet further preferred form of the shock absorbing device for a vehicle of the present invention, an inclination angle of an outer surface of the lateral wall portion with respect to a central axis of the crash box is larger than 0° and not larger than 45°.

The above-indicated second object can be achieved according to the principle of the present invention, which provides a shock absorbing structure for a vehicle, which is configured such that a crash box is disposed between a bumper reinforcement and a side member spaced apart from the bumper reinforcement in a longitudinal direction of the vehicle, and extends in the longitudinal direction of the vehicle, and such that the crash box is plastically deformed by an impact load applied via the bumper reinforcement, thereby absorbing an impact energy,
wherein the crash box is composed of a hollow structure having a transverse cross sectional surface area which gradually decreases in a backward direction of the vehicle, and a through hole is formed in the side member or an auxiliary member which is fixed to the side member and which has a higher deformation strength than the crash box,
and the crash box has an end portion on a rear side of the vehicle, which is fitted in the through hole, and the crash box is displaced in pressing contact with the through hole by the impact load in the backward direction of the vehicle while the crash box is plastically deformed in its radially inward direction, thereby absorbing the impact energy.

### ADVANTAGEOUS EFFECTS OF THE INVENTION

In the shock absorbing device for the vehicle according to the present invention, when the crash box is plastically deformed due to the application of the impact load, substantially no remnant of the plastically deformed portion of the crash box remains between the bumper reinforcement and the crash box supporting member. Therefore, unlike the conventional device, the shock absorbing device of the present invention can permit the axial length of the crash box to be set at a length substantially corresponding to the shock absorbing stroke required for absorbing the desired amount of the impact energy, without an increase of the required thickness of the lateral wall portion of the crash box.

Accordingly, in the shock absorbing device of the present invention, the weight of the crash box can be effectively reduced, and consequently the weight of the entire device can be reduced, while securing the absorption of the desired amount of the impact energy. Also, owing to the reduced axial length of the crash box, a space required for installing the crash box can be made smaller than the space required for installing the conventional device.

The shock absorbing structure for the vehicle according to the present invention can advantageously achieve substantially the same advantages as the above-described shock absorbing device.

### BRIEF DESCRIPTION OF THE DRAWINGS

Fig.1 is a schematic view showing shock absorbing devices for a vehicle constructed according to one embodiment of the present invention and installed on the vehicle;
Fig.2 is a front view of a crash box included in the shock absorbing device shown in Fig.1;
Fig.3 is a cross sectional view taken along a line A-A in Fig.2;
Fig.4 is a schematic view showing the shock absorbing device shown in Fig.1 in a state of its plastic deformation due to an applied impact load; and
Fig. 5 is a view corresponding to a part of Fig.1, showing a shock absorbing device constructed according to another embodiment of the present invention.

### MODES FOR CARRYING OUT THE INVENTION

To further clarify the present invention, preferred embodiments of the invention will be described in detail by reference to the drawings.

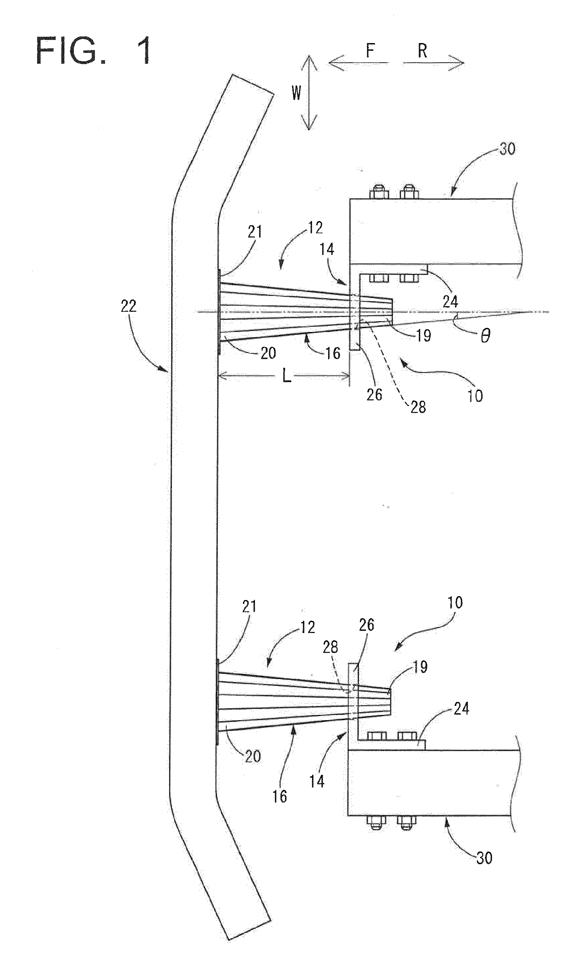

As is shown in Fig. 1, two shock absorbing devices 10 for an automobile, each of which is constructed according to one embodiment of the present invention, are installed in a space between a bumper reinforcement and side members in a front region of the automobile. As is apparent from Fig.1, each vehicular shock absorbing device 10 of this embodiment (hereinafter simply referred to as "shock absorbing device 10") includes a crash box 12 and an auxiliary member 14 which serves as a crash box supporting member.

More specifically described, the crash box 12 is composed of a resin molded article formed by a conventional molding method using a die, such as an injection molding method. The resin material used for the formation of the crash box 12 is not particularly limited, and is suitably selected from resin materials which may be used for the formation of a plastically deformable molded article, and which can exhibit a shock absorbing property required for the crash box 12 owing to the plastic deformation of the molded article. Examples of the resin materials include composite resin materials such as fiberglass-reinforced polypropylene, fiberglass-reinforced polyamide and carbon-fiber-reinforced polypropylene. As the material of the crash box 12 other than the resin materials, there may be used metal materials such as iron and aluminum which may be used for the formation of the plastically deformable molded article.

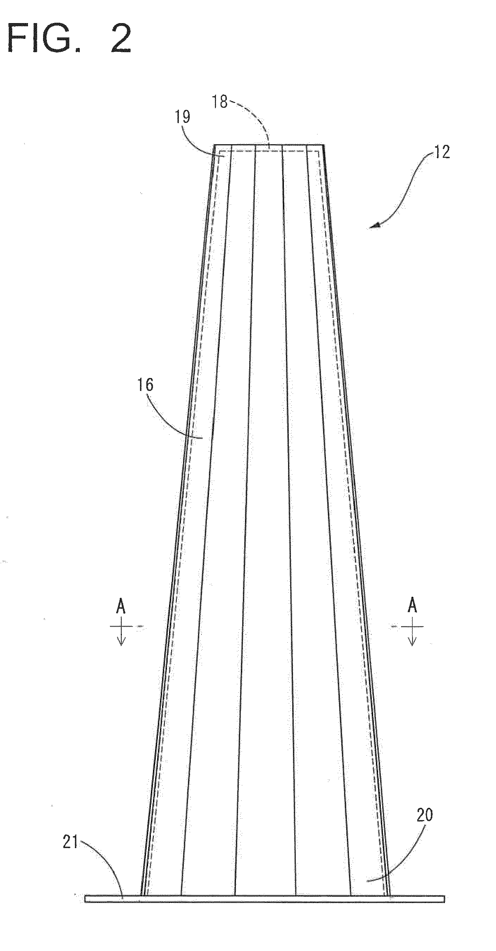

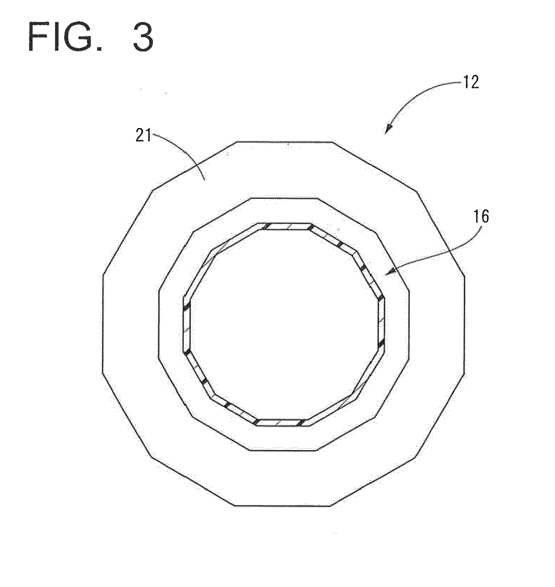

As is shown in Figs. 2 and 3, the crash box 12 is composed of a hollow structure having an overall shape of a truncated polygonal pyramid (truncated dodecagonal pyramid in this embodiment) having a bottom at its one end. Namely, the crash box 12 includes a lateral wall portion 16 and a bottom wall portion 18 which are integrally formed with each other. The lateral wall portion 16 has a regular polygon shape (regular dodecagon shape in this embodiment) in transverse cross section. The transverse cross sectional surface area of the lateral wall portion 16 gradually decreases in an axial direction, such that the lateral wall portion 16 is gradually tapered. One of the opposite axial end portions of the lateral wall portion 16 having a smaller perimeter is defined as a distal end portion 19, and the other axial end portion of the lateral wall portion 16 having a larger perimeter is defined as a proximal end portion 20. The bottom wall portion 18 is composed of a flat plate which has a regular polygon shape (regular dodecagon shape in this embodiment) corresponding to the shape of an opening of the lateral wall portion 16 on the side of the distal end portion 19, and which has substantially the same thickness as the lateral wall portion 16, whereby the opening of the lateral wall portion 16 on the side of the distal end portion 19 is closed by the bottom wall portion 18.

The crash box 12 is not necessarily the truncated polygonal pyramid as long as the crash box 12 is composed of a hollow structure having the transverse cross sectional surface area which gradually decreases in the axial direction. The crash box 12 may be a hollow polygonal pyramid, a hollow cone, or a hollow truncated cone. In this respect, however, it is noted that an impact load is applied to the crash box 12 installed on the vehicle, as a compressive load in its axial direction, as described later. Accordingly, in order to secure the stable shock absorbing property of the crash box 12, it is preferable that the crash box 12 is prevented from being subjected to buckling deformation by the compressive load applied in its axial direction as far as possible. Therefore, the crash box 12 is preferably composed of the hollow polygonal pyramid or hollow truncated polygonal pyramid having corner portions which exhibit the desired effect of preventing the buckling deformation of the crash box 12, rather than the hollow cone.

On one side of the crash box 12 opposite to the bottom wall portion 18, an outer flange portion 21 is formed integrally with the proximal end portion 20 of the lateral wall portion 16. The outer flange portion 21 is composed of an annular flat plate which projects radially outwardly from the peripheral edge of the proximal end portion 20 by a predetermined radial dimension and which continuously extends in the circumferential direction of the proximal end portion 20. The outer flange portion 21 has substantially the same thickness as the lateral wall portion 16.

The crash box 12 is installed on the automobile such that an end face of the proximal end portion 20 and the outer flange portion 21 are held in abutting contact with a bumper reinforcement 22, as described later. Thus, when the impact load is applied to the proximal end portion 20 of the lateral wall portion 16 via the bumper reinforcement 22, there arises a risk that a stress concentrates in the corner portions of the lateral wall portion 16. In this embodiment, however, the outer flange portion 21 is formed integrally with the proximal end portion 20 so as to extend over the entire circumference of the proximal end portion 20, so that even if the stress concentrates in the corner portions of the lateral wall portion 16, occurrence of cracks in the corner portions is effectively prevented. Further, by providing bolt inserting holes in the outer flange portion 21, the outer flange portion 21 may be used as an attachment portion to bolt the crash box 12 to the bumper reinforcement 22.

On the other hand, the auxiliary member 14 shown in Fig. 1 is composed of a metal plate such as a steel plate having a sufficiently higher degree of deformation strength than the crash box 12 made of the resin material. The auxiliary member 14 is a substantially right-angled L-shaped plate member. In the auxiliary member 14, one of two portions which extend from the bent corner in the respective two mutually perpendicular directions serves as a fixing portion 24 in the form of a plate, and the other portion serves as a crash box supporting portion 26 in the form of a plate. A circular through hole 28 is formed so as to extend through the center portion of the crash box supporting portion 26 in its thickness direction. The through hole 28 has a cylindrical inner circumferential surface, and has an inside diameter which is constant in the thickness direction of the crash box supporting portion 26. The inside diameter of the through hole 28 is selected to allow a portion of the crash box 12 to be inserted into the through hole 28, which portion is spaced from the axially central portion of the crash box 12 toward the distal end portion 19 by a predetermined distance.

As is shown in Fig. 1, the two shock absorbing devices 10 each including the above-described crash box 12 and auxiliary member 14 are installed between the bumper reinforcement 22 located in the front region of the automobile so as to extend in the transverse direction of the vehicle, and a pair of side members 30, 30 which are located on respective transversely opposite sides of the vehicle, so as to be spaced apart from the bumper reinforcement 22 toward the rear side of the vehicle by a predetermined distance, and which extend in the longitudinal direction of the vehicle. In Fig. 1, an arrow F indicates the forward direction of the vehicle, and an arrow R indicates the backward direction of the vehicle, while an arrow W indicates the transverse direction of the vehicle.

More specifically described, each of the two auxiliary members 14 is disposed such that the fixing portion 24 contacts with a surface of one of the pair of side members 30, 30, which surface is opposed to the other side member 30, and such that the crash box supporting portion 26 extends from the surface of the above-indicated one side member 30 in contact with the fixing portion 24, toward the other side member 30. In this state, the fixing portion 24 is bolted to the above-indicated one side member 30. Thus, the auxiliary member 14 is disposed such that the through hole 28 formed through the crash box supporting portion 26 is open in the longitudinal direction (front to back direction) of the vehicle.

On the other hand, the crash box 12 is disposed between the crash box supporting portion 26 of the auxiliary member 14 fixed to the side member 30 and the bumper reinforcement 22, so as to extend in the longitudinal direction (front to back direction) of the vehicle with the distal end portion 19 being positioned on the rear side of the vehicle. Namely, the crash box 12 is disposed so as to be tapered such that the transverse cross sectional surface area of the crash box 12 gradually decreases in its axial direction toward the rear side of the vehicle, and such that the axial direction of the crash box 12 coincides with the longitudinal direction of the vehicle. A portion of the crash box 12 on the side of the distal end portion 19, i.e. a portion which is spaced from the axially central portion of the crash box 12 toward the distal end portion 19 by a predetermined distance, is press-fitted in the through hole 28 in the crash box supporting portion 26 of the auxiliary member 14 fixed to the side member 30. In a state where the crash box 12 is attached to the auxiliary member 14 as described above, the end face of the proximal end portion 20 of the crash box 12 and the outer flange portion 21 are held in abutting contact with the bumper reinforcement 22.

Thus, the two shock absorbing devices 10, 10 are installed on the respective transversely opposite sides of the vehicle so as to be located between the bumper reinforcement 22 and the pair of side members 30, 30, and so as not to be displaced in any of the longitudinal, transverse, and vertical directions of the vehicle.

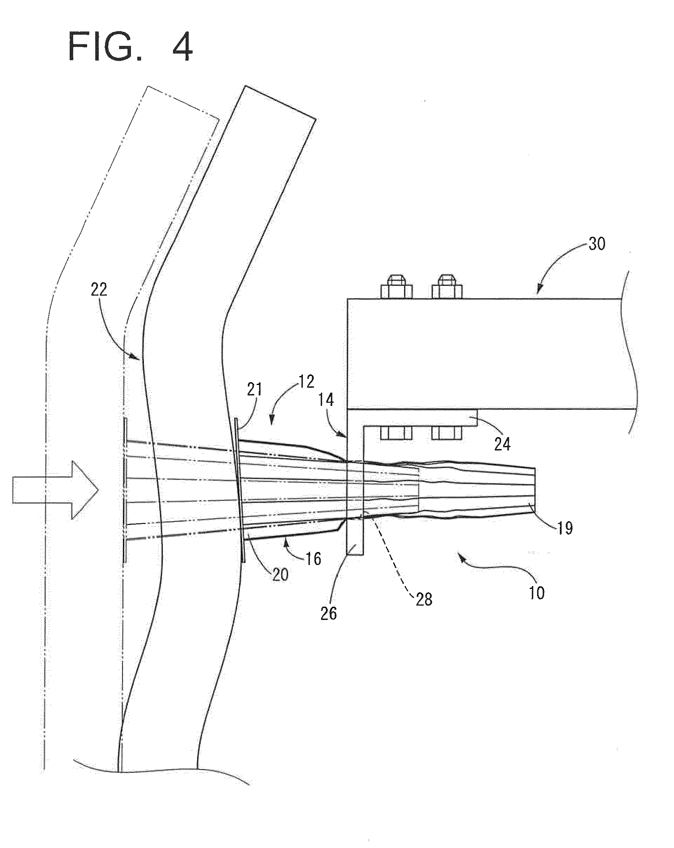

As is shown in Fig. 4, when an impact load is applied to the bumper reinforcement 22 of the automobile equipped with the shock absorbing device 10 on occurrence of a light collision or the like, the bumper reinforcement 22 is displaced in the backward direction of the vehicle from a position indicated with two-dot chain lines to a position indicated with solid lines. At this time, a pressing force is applied to the crash box 12 via the bumper reinforcement 22 in a direction to displace the crash box 12 in the backward direction of the vehicle. The lateral wall portion 16 of the crash box 12 is pressed and displaced by the pressing force in the backward direction of the vehicle, in pressing and sliding contact with the through hole 28 in the crash box supporting portion 26 of the auxiliary member 14. At this time, a considerable friction resistance (sliding resistance) is generated between an outer peripheral surface of the lateral wall portion 16 of the crash box 12 and a peripheral edge portion of the through hole 28 on the side of the bumper reinforcement 22. At the same time, the lateral wall portion 16 is pressed against the peripheral edge portion of the through hole 28 on the side of the bumper reinforcement 22, and plastically deformed and crushed in its radially inward direction, since the through hole 28 is formed in the auxiliary member 14 having the deformation strength which is higher than that of the lateral wall portion 16. Thus, when the impact load is applied to the crash box 12, an amount of impact energy which is substantially the same as that absorbed by the conventional shock absorbing device is effectively absorbed owing to the friction resistance generated between the lateral wall portion 16 of the crash box 12 and the through hole 28, and the plastic deformation of the lateral wall portion 16.

The shock absorbing device 10 of this embodiment is configured to permit the lateral wall portion 16 of the crash box 12 to be plastically deformed and pressed into the through hole 28 in the backward direction of the vehicle when the impact load is applied to the crash box 12. Accordingly, the portion of the lateral wall portion 16 which is to be plastically deformed and which exists in the space between the bumper reinforcement 22 and the crash box supporting portion 26 of the auxiliary member 14 (or the side member 30) is moved through the through hole 28 toward the rear side of the crash box supporting portion 26 while that portion of the lateral wall portion 16 is plastically deformed. Thus, a remnant of the plastically deformed portion of the lateral wall portion 16 does not remain in the above-described space.

Therefore, in the shock absorbing device 10, the axial length (represented by "L" in Fig. 1) of a portion of the crash box 12 positioned between the bumper reinforcement 22 and the crash box supporting portion 26 of the auxiliary member 14 is set to correspond to a distance by which the crash box 12 is pressed into the through hole 28 while the crash box 12 is plastically deformed when a maximum impact load assumed for the sake of design is applied to the crash box 12. In other words, the axial length of the portion of the crash box 12 positioned between the bumper reinforcement 22 and the crash box supporting portion 26 of the auxiliary member 14 is substantially the same as the required shock absorbing stroke, and does not include the length of the remnant of the plastically deformed portion of the crash box 12.

Thus, in the shock absorbing device 10 of this embodiment, the entire length of the crash box 12 in its axial direction is sufficiently reduced as compared with that of the conventional crash box, the axial length of which is set at the sum of the required shock absorbing stroke and the length of the remnant of the plastically deformed portion of the crash box.

In the shock absorbing device 10 having the above-described structure, a thickness of the lateral wall portion 16 and an inclination angle of the outer surface of the lateral wall portion 16 with respect to the central axis of the crash box 12 have significant influences on the plastic deformation strength and the deformation resistance of the crash box 12 to be exhibited when the crash box 12 is pressed into the through hole 28.

Therefore, the lateral wall portion 16 of the crash box 12 preferably has a thickness of at least 1.0 mm. Where the lateral wall portion 16 has the thickness of at least 1.0 mm, the crash box 12 can have a plastic deformation strength sufficient to secure the absorption of the desired amount of the impact energy. However, an excessively large thickness of the lateral wall portion 16 gives rise to a risk of an undesirable increase of the weight of the crash box 12. In order to avoid such a risk, the thickness of the lateral wall portion 16 is preferably about 4.0 mm or smaller so as not to exceed the thickness of the conventional crash box made of a resin material.

The inclination angle θ of the outer surface of the lateral wall portion 16 with respect to the central axis of the crash box 12 is preferably larger than 0° and not larger than 45°. In the case where the inclination angle θ is not larger than 0°, namely, the outer surface of the lateral wall portion 16 is parallel to the central axis of the crash box 12, or the transverse cross sectional surface area of the lateral wall portion 16 gradually increases in the backward direction of the vehicle, the friction resistance generated between the outer surface of the lateral wall portion 16 and the through hole 28 is excessively small, and further, the amount of plastic deformation of the lateral wall portion 16 is excessively small, when the crash box 12 is pressed or inserted into the through hole 28 by the applied impact load, giving rise to a risk of difficulty in securing the absorption of the desired amount of the impact energy. In the case where the inclination angle θ is larger than 45°, an excessively large friction resistance is generated between the outer surface of the lateral wall portion 16 and the through hole 28 when the lateral wall portion 16 is pressed into the through hole 28, giving rise to a risk that the lateral wall portion 16 is not smoothly inserted into the through hole 28 and subjected to the buckling deformation.

The lateral wall portion 16 is preferably composed of the hollow truncated polygonal pyramid or the hollow polygonal pyramid, as described above. The polygon shape of the lateral wall portion 16 in its transverse cross section may be suitably determined to permit the absorption of the desired amount of the impact energy, taking account of the plastic deformation strength of the lateral wall portion 16 to be exhibited when the lateral wall portion 16 is pressed into the through hole 28 and crushed in its radially inward direction.

As described above, the shock absorbing device 10 of this embodiment can absorb the desired amount of the impact energy which is substantially the same as that absorbed by the conventional shock absorbing device, while permitting sufficient reduction of the axial length of the crash box 12 as compared with that of the conventional crash box, and without a need of increasing the thickness of the crash box 12.

Therefore, in the shock absorbing device 10 of this embodiment, the weight of the crash box 12 and accordingly the weight of the entire device can be extremely effectively reduced while securing the absorption of the desired amount of the impact energy. Further, owing to the reduced axial length of the crash box 12, the space required for installing the crash box 12 between the bumper reinforcement 22 and the side members 30 can be reduced.

Further, the weight of the shock absorbing device 10 of this embodiment is more advantageously reduced since the crash box 12 is composed of the resin molded article.

In the shock absorbing device 10 of this embodiment, the lateral wall portion 16 of the crash box 12 has the shape of the truncated polygonal pyramid, so that when the lateral wall portion 16 is crushed in its radially inward direction, the lateral wall portion 16 can exhibit a sufficiently higher degree of plastic deformation strength as compared with a lateral wall portion having the shape of the hollow cone. Further, the plastic deformation strength of the lateral wall portion 16 in its radially inward direction can be easily adjusted by merely changing the polygon shape of the lateral wall portion 16 in its transverse cross section.

Although the specific arrangement of the present invention has been described for the purpose of illustration only, the present invention is not limited to the above description.

In the above-described embodiment, for example, the through hole 28 in which the portion of the lateral wall portion 16 of the crash box 12 on the side of the distal end portion 19 is inserted is formed in the auxiliary member 14 fixed to the side member 30. However, the through hole 28 may be formed in the side member 30.

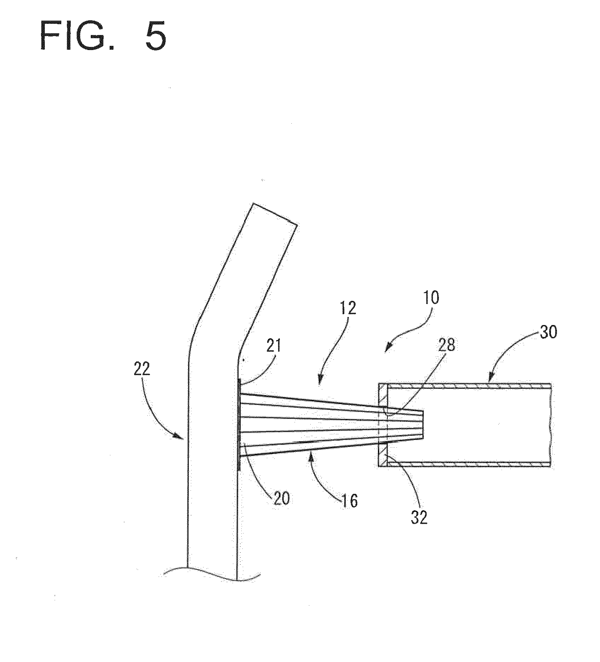

Namely, as is shown in Fig. 5, for example, a metal plate 32 is fixed by welding or the like to the front end face of the side member 30 composed of a rectangular hollow structure so that an opening of the side member 30 on the side of its front end face is closed by the metal plate 32. The through hole 28 may be formed in the metal plate 32 so as to be open in the longitudinal direction of the vehicle. In this case, the lateral wall portion 16 of the crash box 12 is pressed into the through hole 28 while the lateral wall portion 16 is plastically deformed in its radially inward direction, and displaced in the backward direction of the vehicle within the inner space of the side member 30. This embodiment has substantially the same advantages as the above-described first embodiment.

The metal plate 32 fixed to the front end face of the side member 30 may be a plate which is conventionally fixed to the side member 30, or a plate which is fixed to the side member 30 as a component of the auxiliary member. In the case where the through hole 28 is formed in the metal plate 32 conventionally fixed to the side member 30, the crash box supporting member is composed of the metal plate 32 and the side member 30 to which the metal plate 32 is fixed. The same reference signs as used in Fig. 1 are used in Fig. 5 to denote members and portions of this embodiment, which are similar in structure to the corresponding members and portions of the embodiment shown in Fig. 1, and detailed description of which is omitted.

The position of the crash box 12 is not specifically limited as long as the crash box 12 is disposed between the bumper reinforcement 22 and the crash box supporting member. For example, each of the crash box supporting portions 26 may be disposed so as to extend from a surface of one of the pair of side members 30, 30, which surface is opposite to the above-described surface opposed to the other side member 30, in the direction away from the other side member 30, so that the two crash boxes 12 are disposed between the bumper reinforcement 22 and the crash box supporting portions 26 while the pair of side members 30, 30 are interposed between the two crash boxes 12. Also, the two crash boxes 12 may be disposed between the auxiliary members 14 and the bumper reinforcement 22 so as to be located on the upper side or the lower side of the side members 30, 30.

Further, the shape of the lateral wall portion 16 of the crash box 12 is not specifically limited as long as the transverse cross sectional surface area of the lateral wall portion 16 gradually decreases in an axial direction. The outer peripheral surfaces of the lateral wall portion 16 of the crash box 12 may be composed of surfaces which are curved radially outwardly or radially inwardly, or surfaces having stepped portions.

The shape of the through hole 28 into which the lateral wall portion 16 of the crash box 12 is inserted can be appropriately changed in accordance with the transverse cross sectional shape of the lateral wall portion 16. Also, the shape of the inner circumferential surface of the through hole 28 is not limited. The inner circumferential surface of the through hole 28 may have a shape corresponding to the shape of the portion of the lateral wall portion 16, which portion is to be inserted into the through hole 28. For example, the through hole 28 may be formed to have an inside diameter which gradually decreases in the backward direction of the vehicle. In this case, when the lateral wall portion 16 of the crash box 12 is pressed into the through hole 28 by the applied impact load, the friction resistance is generated mainly between the outer peripheral surface of the lateral wall portion 16 and the inner circumferential surface of the through hole 28, and the lateral wall portion 16 is plastically deformed by pressing contact with the inner circumferential surface of the through hole 28. Further, the peripheral edge portion of the though hole 28 on the side of the bumper reinforcement 22 may have a sharp edge or a relatively blunt edge.

Where the through hole 28 is formed in the auxiliary member 14, the auxiliary member 14 may be formed of a resin material having a higher deformation strength than the crash box 12, other than a metal material. The shape and size of the auxiliary member 14 may be appropriately selected.

In addition, it is to be understood that the present invention can be advantageously applied to shock absorbing devices for various vehicles other than the automobile.

It is to be understood that the present invention may be embodied with various other changes, modifications and improvements, which may occur to those skilled in the art, without departing from the spirit and scope of the invention.

### NOMENCLATURE OF ELEMENTS

10: Shock absorbing device
12: Crash box
14: Auxiliary member
22: Bumper reinforcement
28: Through hole
30: Side member
32: Metal plate

## Claims

1. A shock absorbing device (10) for a vehicle, for absorbing an impact energy applied via a bumper reinforcement (22), the shock absorbing device comprising:
a crash box (12) composed of a plastically deformable hollow structure having a transverse cross sectional surface area which gradually decreases in an axial direction, the crash box being disposed on a rear side of the bumper reinforcement so as to extend in a longitudinal direction of the vehicle such that the transverse cross sectional surface area of the crash box gradually decreases in a backward direction of the vehicle; and
a crash box supporting member (14) made of a material having a higher deformation strength than the crash box, the crash box supporting member being disposed such that the crash box disposed on the rear side of the bumper reinforcement is interposed between the crash box supporting member and the bumper reinforcement in the longitudinal direction of the vehicle, wherein a through hole (28) is formed through the crash box supporting member so as to be open in the longitudinal direction of the vehicle, and one of opposite axial end portions of the crash box is fitted in the through hole, which one axial end portion of the crash box is positioned on a rear side of the vehicle and has a smaller transverse cross sectional surface area than the other of said opposite axial end portions of the crash box positioned on a front side of the vehicle, whereby the crash box supporting member is fixed to the vehicle,
the shock absorbing device being configured such that when an impact load is applied to the crash box via the bumper reinforcement, the crash box is displaced in pressing contact with the through hole in the crash box supporting member in the backward direction of the vehicle while the crash box is plastically deformed in its radially inward direction, thereby absorbing the impact energy.

2. The shock absorbing device for a vehicle according to claim 1, wherein the crash box supporting member (14) is composed of an auxiliary member fixed to a side member (30) which is spaced apart from the bumper reinforcement (22) in the longitudinal direction of the vehicle.

3. The shock absorbing device for a vehicle according to claim 1 or 2, wherein the crash box (12) is composed of a resin molded article.

4. The shock absorbing device for a vehicle according to any one of claims 1 to 3, wherein the crash box (12) has a shape of a truncated polygonal pyramid.

5. The shock absorbing device for a vehicle according to any one of claims 1 to 4, wherein the crash box (12) includes a lateral wall portion (16) and a bottom wall portion (18), and on one side of the crash box opposite to the bottom wall portion, an outer flange portion (21) is formed integrally with the lateral wall portion so as to extend over an entire circumference of the lateral wall portion, wherein the crash box is installed on the vehicle such that an end face of the lateral wall portion and the outer flange portion are held in abutting contact with the bumper reinforcement (22).

6. The shock absorbing device for a vehicle according to any one of claims 1 to 5, wherein the lateral wall portion (16) of the crash box has a thickness of at least 1.0 mm and not more than 4.0 mm.

7. The shock absorbing device for a vehicle according to any one of claims 1 to 6, wherein an inclination angle of an outer surface of the lateral wall portion (16) with respect to a central axis of the crash box (12) is larger than 0° and not larger than 45°.

8. A shock absorbing structure for a vehicle, which is configured such that a crash box (12) is disposed between a bumper reinforcement (22) and a side member (30) spaced apart from the bumper reinforcement in a longitudinal direction of the vehicle, and extends in the longitudinal direction of the vehicle, and such that the crash box is plastically deformed by an impact load applied via the bumper reinforcement, thereby absorbing an impact energy,
wherein the crash box is composed of a hollow structure having a transverse cross sectional surface area which gradually decreases in a backward direction of the vehicle, and a through hole (28) is formed in the side member or an auxiliary member (14) which is fixed to the side member and which has a higher deformation strength than the crash box,
and the crash box has an end portion on a rear side of the vehicle, which is fitted in the through hole, and the crash box is displaced in pressing contact with the through hole by the impact load in the backward direction of the vehicle while the crash box is plastically deformed in its radially inward direction, thereby absorbing the impact energy.
